# DEMANDE DE BREVET EUROPEEN

(11) **EP 0 703 440 A1**
(43) Date de publication de la demande: **27.03.1996**
(21) Numéro de dépôt: 95430006.7
(22) Date de dépôt: 14.09.1995
(51) Int. Cl.: G01M 3/24

(54) **Dispositif de détection et de localisation de fuites de fluide**

(30) Priorité: 20.09.1994 FR 9411539
(71) Demandeur: TECHNOFIRST, F-13676 Aubagne Cedex (FR); GAZ DE FRANCE, F-93211 La Plaine St. Denis (FR)
(72) Inventeur: Carme, Christian, F-13008 Marseille (FR); Delemotte, Virginie, F-13001 Marseille (FR); Del Tatto, Alain, F-83210 La Farlede (FR); Ardouin, Jean René, F-83110 Sanary (FR)
(74) Mandataire: Somnier, Jean-Louis

(57) **Abrégé**

La présente invention est relative à un dispositif de détection et de localisation de fuites de fluide circulant dans des canalisations.

Le domaine technique de l'invention est celui des dispositifs de détection de fuites de fluide.

Le dispositif comporte un capteur (1, 2) d'écoute, comporte un dispositif de traitement des signaux délivrés par ledit capteur d'écoute et comporte un casque muni de haut-parleurs (15) alimentés par ledit dispositif de traitement de signaux, lequel casque comporte en outre un microphone (16) connecté auxdits moyens de traitement de signaux, et lesdits moyens de traitement de signaux comportent des moyens électroniques (9, 10) de réduction du bruit.

## Description

La présente invention est relative à un dispositif de détection et de localisation de fuites de fluide circulant dans des canalisations qui sont, en partie au moins, enterrées ou enfouies dans le sol.

Le domaine technique de l'invention est celui des dispositifs de détection de fuites de fluide.

La demande de brevet FR 2620792 (IGET INTERNATIONAL) décrit un procédé de localisation de fuites de fluide dans des canalisations enterrées, dans lequel on émet un signal acoustique dans le liquide en un point de la canalisation et l'on recueille à la surface du sol le signal transmis par le liquide et par le terrain situé autour de la canalisation, ce qui permet de relever les emplacements auxquels le signal recueilli atteint une valeur maximum.

Ce document décrit également un dispositif pour la localisation de fuites, comprenant des moyens émetteurs pour émettre un signal acoustique dans le liquide en un point de la canalisation, des moyens récepteurs comprenant un capteur acoustique auquel est associé un circuit de filtrage, pour recueillir le signal transmis, qui sont mobiles à la surface du sol au-dessus de la canalisation et qui comportent des moyens pour analyser le signal recueilli ; le signal du capteur acoustique amplifié est appliqué à des moyens d'analyse, tel qu'un voltmètre ou un casque d'écoute notamment.

La présente invention a pour objet de procurer un dispositif amélioré pour la détection et la localisation de fuites de fluide dans les canalisations enterrées ou non.

L'invention a pour objectif de faciliter l'identification et/ou la reconnaissance par un opérateur portant un casque diffusant des ondes sonores représentatives du signal capté et amplifié, du bruit caractéristique provoqué par la fuite du fluide.

La présente invention a notamment comme objectif de procurer un dispositif de localisation de fuites dans des canalisations enterrées, qui soit plus facile à mettre en oeuvre que le dispositif décrit dans la demande de brevet sus-citée ; en effet, le dispositif décrit dans ce document, qui nécessite d'émettre un signal acoustique dans le liquide en un point de la canalisation tel qu'un regard ou une cuve de stockage, est très difficile sinon impossible à mettre en oeuvre, lorsque la canalisation à contrôler est dénuée de ce type d'accessoire ou bien dans le cas où ce type d'accessoire de canalisation est très éloigné de l'endroit où se situe la fuite.

La présente invention a également pour objet de procurer un tel dispositif qui puisse être utilisé dans le cas où le fluide circulant dans les canalisations est en partie au moins en phase gazeuse, et est inflammable ou combustible et/ou toxique.

La solution au problème posé consiste à procurer un dispositif de détection et de localisation de fuites de fluides, notamment des fluides gazeux, inflammables ou toxiques, circulant dans des canalisations (par exemple des canalisations enterrées dans le sol), lequel dispositif comporte un capteur d'écoute (acoustique ou de vibrations) sans contact avec les canalisations, comporte un dispositif de traitement des signaux délivrés par ledit capteur d'écoute et comporte un casque muni de haut-parleurs alimentés par ledit dispositif de traitement de signaux, lequel casque comporte en outre un microphone (appelé ci-après microphone de réduction de bruit environnant) connecté auxdits moyens de traitement de signaux, et dans lequel lesdits moyens de traitement de signaux comportent des moyens électroniques de réduction du bruit ambiant.

Selon des modes préférentiels de réalisation de l'invention :
- ledit capteur d'écoute est un microphone d'écoute ou un accéléromètre ;
- le dispositif comporte un casque muni de deux coquilles acoustiquement isolées, chacune desdites coquilles comportant ledit haut-parleur et ledit microphone de réduction de bruit, qui sont connectés auxdits moyens de traitement de signaux, et ledit capteur d'écoute est monté sur un support susceptible d'être enfoncé dans un puits creusé dans le sol ;
- le dispositif comporte des moyens pour positionner ledit microphone d'écoute dans ledit puits à une profondeur comprise entre 10-1 mètre et 1 mètre, de préférence voisine de 4.10-1 à 5.10-1 mètres, et comporte des moyens pour régler ou faire varier ladite profondeur d'enfoncement dudit microphone d'écoute dans ledit puits ;
- le dispositif comporte des moyens d'isolation acoustique et vibratoire (de préférence passive) dudit capteur d'écoute ;
- ledit capteur d'écoute est monté à l'extrémité inférieure d'un support tel qu'un tube plongeur qui est susceptible de coulisser à l'intérieur d'un guide, de préférence tubulaire, entouré d'une chemise isolante (permettant de limiter les perturbations d'origine acoustique et/ou vibratoire) ;
- dans le cas où ledit capteur d'écoute est constitué par un microphone, ledit guide est pourvu à son extrémité inférieure d'un obturateur (en forme de plaque) acoustiquement transparent ;
- le dispositif comporte deux capteurs d'écoute respectivement fixés à deux supports tubulaires susceptibles d'être disposés à l'intérieur de deux puits respectifs creusés dans le sol ; lesdits moyens de traitement de signaux délivrés par lesdits capteurs d'écoute comportent un sélecteur commutable, permettant de transmettre les signaux issus par l'un ou l'autre desdits capteurs d'écoute vers lesdits moyens de traitement de signaux ;
- le dispositif comporte à l'intérieur d'un boîtier portable :

un sélecteur permettant de commuter un capteur d'écoute choisi parmi deux capteurs d'écoute,
un préamplificateur des signaux délivrés par l'un ou l'autre desdits capteurs d'écoute,
un filtre passe-haut ou passe-bande permettant de filtrer les signaux délivrés par ledit préamplificateur,
un dispositif de visualisation ou d'affichage du niveau moyen des signaux délivrés par ledit filtre passe-haut, tel que par exemple un galvanomètre ou un afficheur numérique,
un amplificateur réglable, permettant d'amplifier les signaux délivrés par ledit filtre passe-haut pour obtenir un niveau d'écoute variable desdits signaux,
une source d'énergie électrique telle qu'un accumulateur, permettant d'alimenter lesdits capteurs d'écoute, lesdits moyens de traitement de signaux prévus dans ledit boîtier et lesdits hauts-parleurs et microphones prévus dans ledit casque ;
- ledit filtre (passe-haut ou passe-bande) a une pente d'atténuation dans les basses fréquences au moins égale à 12 décibels par octave et au plus égale 24 décibels par octave ; la fréquence basse de coupure dudit filtre est supérieure ou égale à 100 hertz, et de préférence comprise entre 200 et 400 hertz;
- ledit filtre (passe bande a une pente d'atténuation dans les hautes fréquences au moins égale à 6 décibels par octave et au plus égale à 24 décibels par octave ; la fréquence haute de coupure dudit filtre est inférieure ou égale à 2000 hertz, et de préférence de l'ordre de 800 à 1000 hertz.
- ledit microphone d'écoute du bruit de fuite du fluide dans ladite canalisation, est monté à l'extrémité inférieure d'un support par l'intermédiaire de bagues isolantes (permettant de limiter les perturbations d'origine acoustique et/ou vibratoire) ;
- ledit microphone d'écoute est un microphone miniature à électret, et le diamètre extérieur dudit guide du support du microphone d'écoute, est inférieur ou égal à 30 millimètres, par exemple inférieur ou égal à 20 millimètres.

Lorsque le capteur d'écoute est un microphone, celui-ci doit capter les fluctuations de pression acoustique (le bruit) provenant de la fuite, transmis à travers le terrain entre la canalisation et la poche d'air existant au fond du carottage (puits) et dans l'extrémité inférieure du guide d'onde. Lorsque le capteur d'écoute est constitué par un accéléromètre, celui-ci doit être posé au fond du carottage et doit capter les vibrations provenant de la fuite, transmises à travers le terrain entre la canalisation et le fond du carottage.

L'invention procure un système portable et autonome, très facile à mettre en oeuvre pour détecter et localiser précisément, avec une précision de l'ordre de 0,5 mètres, des fuites se produisant dans des canalisations enterrées ; la présente invention est facilement applicable dans le cas de détection de fuites sur des réseaux de canalisations de transport de gaz combustibles, par exemple les réseaux (urbains notamment) de desserte en gaz utilisable pour le chauffage d'immeubles ou d'habitations.

Grâce aux caractéristiques particulières de l'invention, le dispositif selon l'invention ne nécessite pas l'utilisation d'une source d'un signal acoustique dans le liquide dans un point de la canalisation.

L'invention permet, en utilisant un capteur d'écoute qui est par exemple situé (au fond du puit perforé dans le sol à cet effet) à une distance de la paroi de la canalisation qui peut varier de quelques centimètres à plusieurs mètres, d'effectuer une mesure de bruit ou vibration sans contact avec la canalisation.

Le dispositif selon l'invention est très sensible aux bruits provoqués par les fuites de fluide et peut permettre à un opérateur portant le casque et un boîtier portable de traitement de signaux relié au capteur d'écoute disposé dans des supports enfoncés dans le sol, de détecter et distinguer facilement le bruit provoqué par ladite fuite et transmis par le sol jusqu'au capteur d'écoute.

Le dispositif selon l'invention présente notamment l'avantage de permettre à un opérateur de distinguer un bruit ou une vibration provoqué par une fuite du fluide circulant dans les canalisations, d'autres bruits ou vibrations d'origine souterraine ou de surface, plus particulièrement les bruits ou vibrations provoqués par les câbles électriques enterrés, les bruits ou vibrations provoqués par le passage à la surface du sol de véhicules automoteurs notamment.

Par ailleurs, les caractéristiques électroacoustiques particulières des capteurs d'écoute disposés dans un puits (de faible diamètre) qui peut être aménagé facilement dans le sol, ainsi que la structure du support du capteur d'écoute, permet d'assurer une très grande sensibilité aux bruits de fuites.

Les nombreux avantages procurés par l'invention seront mieux compris au travers de la description suivante et des dessins annexés qui illustrent sans aucun caractère limitatif des modes particuliers de réalisation du dispositif selon l'invention.

La Figure 1 illustre schématiquement les principaux constituants d'un dispositif selon l'invention et leur mode d'utilisation.

La Figure 2 illustre en coupe par un plan vertical un mode préférentiel de réalisation d'un support de microphone d'écoute et son utilisation pour la mise en oeuvre du dispositif de localisation de fuites selon l'invention.

La Figure 3 illustre en coupe par un plan vertical une variante de réalisation du support de capteur d'écoute lorsque celui-ci est constitué par un accéléromètre.

La figure 4 illustre schématiquement le module de la fonction de transfert d'un mode préférentiel de réalisation d'un filtre entrant dans la composition des moyens de traitement des signaux délivrés par le capteur d'écoute.

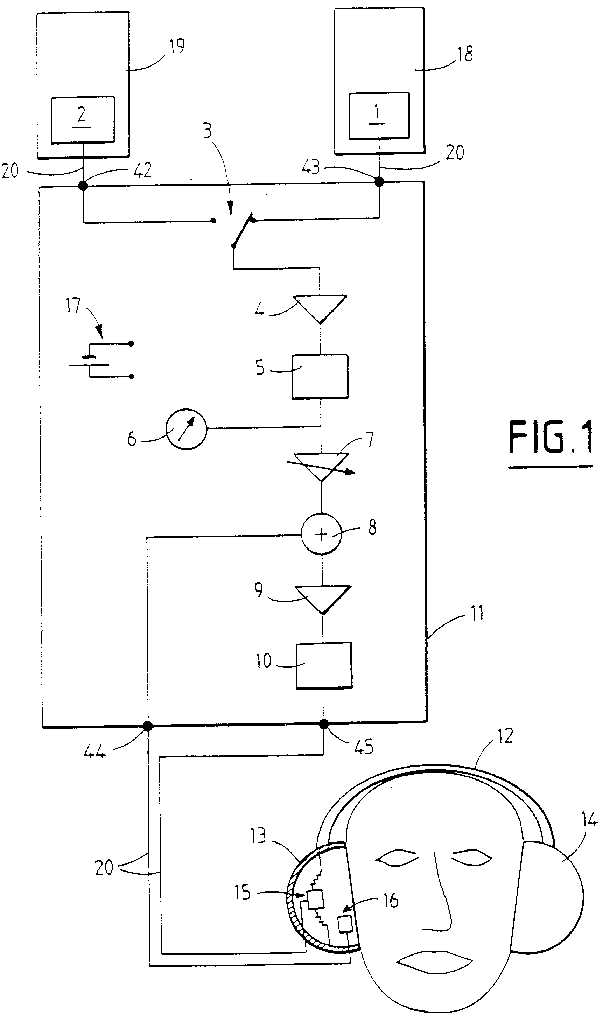

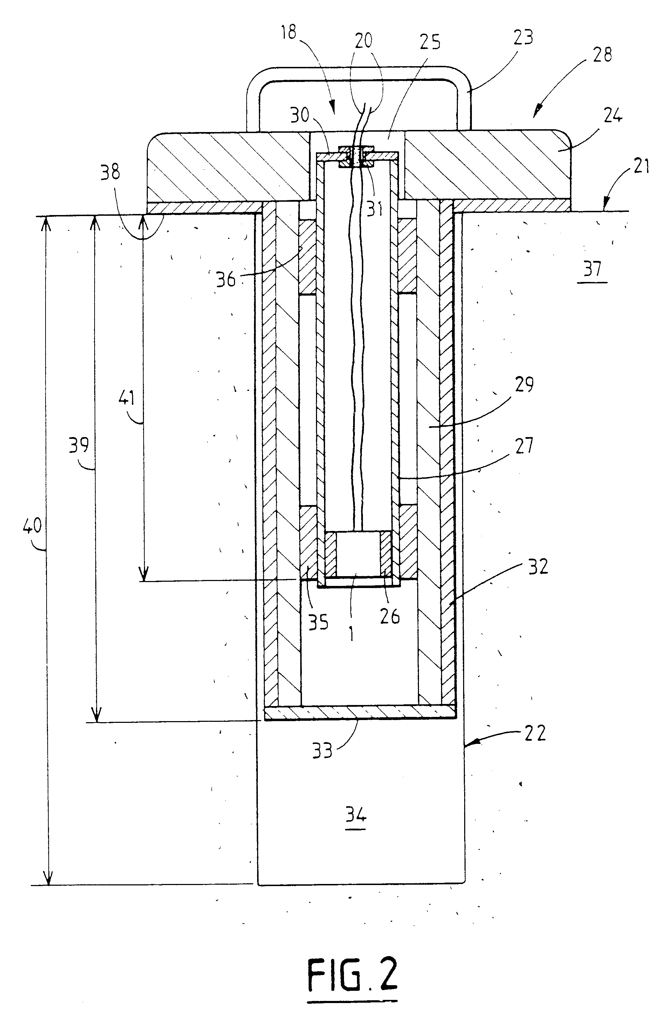

Le dispositif illustré Figure 1 comporte deux capteurs acoustiques ou microphones 1, 2, respectivement montés sur des supports 18, 19 faisant l'objet de la Figure 2.

Les deux microphones 1, 2 sont reliés par des câbles 20 à des bornes d'entrée 42 et 43 prévues sur un boîtier 11 renfermant les moyens de traitement des signaux délivrés par les deux microphones d'écoute 1 et 2.

Le boîtier 11 de traitement de signaux est également relié à un casque essentiellement constitué par deux coquilles 13, 14 par exemple sensiblement hémisphériques, dont la paroi est acoustiquement isolée, et qui peuvent tenir sur la tête d'un opérateur de manière à être en regard des deux oreilles de l'opérateur, grâce à un arceau 12 reliant les deux demi-coquilles 13 et 14.

Chacune des coquilles 13 et 14 du casque comporte un haut-parleur 15 et un microphone 16 placé à proximité du haut-parleur 15 et de l'oreille de l'opérateur portant ledit casque, lesquels haut-parleurs 15 et microphones 16 sont reliés par des câbles 20 à une borne d'entrée 44 (pour ce qui concerne le microphone 16) et à une borne de sortie 45 (pour ce qui concerne le haut-parleur 15), lesquelles bornes 44, 45 sont également prévues sur ledit boîtier 11.

Ledit boîtier 11 peut être de dimensions réduites, muni d'une bandoulière pour être porté et manipulé par l'opérateur portant le casque.

A cet effet, ledit boîtier 11 comporte une source interne d'énergie électrique, telle qu'un accumulateur 17 alimentant lesdits capteurs acoustiques 1 et 2, ledit casque ainsi que les différents circuits de traitement de signaux prévus dans le boîtier.

Comme illustré sur cette Figure 1, les signaux délivrés par les microphones d'écoute 1 et 2, sont acheminés jusqu'à un sélecteur 3, permettant de relier l'un ou l'autre, au choix de l'opérateur portant le boîtier 11, des microphones 1 et 2, à l'entrée d'un préamplificateur 4 permettant d'amplifier les signaux délivrés par lesdits microphones d'écoute 1 et 2.

La sortie dudit préamplificateur 4 est connectée à l'entrée d'un filtre passe-haut ou passe-bande 5, dont la fréquence de coupure est de préférence voisine de 200 à 400 hertz et ayant une pente d'atténuation en-dessous de la fréquence basse de coupure relativement élevée, ce qui permet de filtrer des bruits parasites de très basses fréquences (qui ne sont pas efficacement atténués par les moyens d'isolation acoustique passive prévus dans le support de capteur d'écoute).

La sortie dudit filtre 5 peut être raccordée à un galvanomètre 6 permettant de visualiser le niveau moyen du signal délivré par l'un ou l'autre desdits microphones d'écoute 1 et 2.

Le signal délivré par ledit filtre 5 est appliqué à l'entrée d'un amplificateur 7 à gain variable, permettant à l'opérateur de régler le niveau d'écoute desdits signaux délivrés par les microphones d'écoute 1 et 2.

Le signal délivré par ledit amplificateur 7 est délivré à l'entrée d'un sommateur 8 qui additionne le signal délivré par ledit amplificateur 7 au signal délivré par le microphone 16 prévu dans la demi-coquille dudit casque.

Le signal présent à la sortie du sommateur 8 est appliqué à l'entrée d'un amplificateur 9, suivi d'un filtre 10 permettant de générer un signal de contre-réaction qui est délivré au haut-parleur 15 et qui permet d'affaiblir le bruit ambiant, ce qui permet d'augmenter l'intelligibilité des signaux délivrés par les microphones d'écoute 1 et 2 et ce qui facilite la reconnaissance par l'opérateur du bruit de fuite et lui permet également grâce au sélecteur 3, en commutant successivement l'un puis l'autre desdits microphones 1 et 2, de détecter celui desdits microphones d'écoute 1 et 2 qui est le plus proche du point de fuite situé sur la canalisation par une simple comparaison du niveau de bruit perçu par l'opérateur.

Les moyens d'atténuation électronique active du bruit, essentiellement constitués par ledit amplificateur 9 et ledit filtre 10, sont par exemple conformes à ceux décrits dans le brevet EP 237454 (CENTRE NATIONAL DE LA RECHERCHE SCIENTIFIQUE) ; dans ce cas, la fonction de transfert du filtre 10 est une fonction polynomiale complexe, et le produit du gain constant de l'amplificateur 9 par le module de la fonction de transfert du filtre 10 et par le module de la fonction de transfert en boucle ouverte, mesurée entre l'entrée du haut-parleur 15 et la sortie du microphone 16, est nettement supérieur à 1 dans toute la plage des fréquences acoustiques devant être atténuées, la boucle de contre-réaction étant stable pour les fréquences audibles.

Alternativement au schéma faisant l'objet de la Figure 1, les signaux délivrés par les microphones d'écoute 1 ou 2 et prétraités par les moyens 4, 5, 7 décrits ci-avant, peuvent être appliqués entre l'amplificateur 9 et le filtre 10 par un sommateur prévu à cet effet.

Lorsqu'un accéléromètre est utilisé comme capteur d'écoute, les moyens de traitement des signaux délivrés par l'accéléromètre peuvent être identiques ou similaires à ceux décrits ci-avant (en référence à la Figure 1) pour le traitement des signaux délivrés par les microphones d'écoute.

Comme illustré Figure 2, le support 18 du microphone d'écoute 1 des bruits de fuites de fluide de la canalisation enterrée, comporte un tube plongeur 27 constituant un support du microphone 1, qui peut coulisser à l'intérieur d'un guide 28 reposant par sa partie supérieure à la surface 21 du sol 37 ; le microphone 1 peut ainsi être positionné et/ou introduit dans un puits ou trou 22 sensiblement cylindrique creusé ou foré dans le sol 37 jusqu'à une profondeur 40 par exemple de l'ordre de 50 centimètres.

Ledit microphone d'écoute 1 est fixé sensiblement à l'extrémité inférieure dudit tube plongeur 27, par l'intermédiaire d'une bague 26 entourant ledit microphone 1 et de préférence réalisée dans un matériau élastomère, ledit tube 27 pouvant être métallique.

Le tube 27 est fermé à son extrémité supérieure par une plaque 30 percée d'un orifice par exemple central, qui est muni d'un presse-étoupe ou passe-fil 31 au travers duquel peuvent passer les fils ou câbles 20 de raccordement du microphone 1 au dispositif de traitement illustré Figure 1.

Ledit tube 27 formant support du microphone 1 peut coulisser à l'intérieur dudit guide 28, grâce à des bagues 35 et 36, entourant sensiblement chacune des extrémités dudit tube 27 et assurant une atténuation des vibrations et empêchant la propagation de bruits venant de l'extérieur jusqu'à l'intérieur de la cavité 34 restant en partie basse du trou 22, lorsque l'ensemble du dispositif comme illustré Figure 2 est inséré dans ledit trou.

La hauteur ou profondeur 41 du microphone 1 dans le puits 22 peut ainsi être réglée par coulissement du tube 27 à l'intérieur d'un tube guide 29 faisant partie du guide 28.

Le tube guide 29 par exemple métallique, est de préférence entouré d'une chemise acoustiquement isolante 32, par exemple réalisée en un matériau élastomère, l'extrémité inférieure dudit tube guide 29 étant en outre occultée par un bouchon 33 en matériau acoustiquement transparent (tel que du tissu de fibres synthétiques), ce qui permet audit microphone d'écoute 1 d'être sensible aux ondes acoustiques se propageant dans la cavité 34, située en partie inférieure du puits 22.

Ledit guide 28 comporte de préférence une plaque 24 massive, par exemple en forme de disque épais, qui peut reposer par sa partie inférieure à la périphérie de l'entrée du puits 22, sur la surface 21 du sol 37, de préférence par l'intermédiaire d'un matelas 38 d'un matériau acoustiquement isolant et/ou d'un matériau amortisseur de chocs et vibrations (matériau élastomère par exemple).

Ledit disque épais 24 est de préférence muni dans sa partie supérieure d'une poignée 23 facilitant la manipulation de l'ensemble du dispositif de manipulation et formant support du microphone d'écoute 1 qui est représenté sur cette Figure 2.

Comme illustré sur cette Figure, ledit tube plongeur 27 formant support du microphone 1, peut être actionné en coulissement, manuellement par l'opérateur portant le casque et le boîtier de traitement illustré Figure 1, grâce à une ouverture 25 prévue au centre de la plaque 24.

De préférence, la hauteur 39 dudit tube guide 29 (mesurée par rapport à la face inférieure de ladite plaque 24) est inférieure d'environ 5 centimètres à la profondeur 40 du puits creusé dans le sol.

A titre d'exemple, ledit microphone 1 d'écoute peut être constitué par un microphone à électret de taille réduite, peu sensible aux vibrations, ayant un niveau de bruit intrinsèque faible et une sensibilité élevée (par exemple de l'ordre de 0,1 à 0,2 volt par pascal), par exemple un microphone vendu par la Société KNOWLES ELECTRONICS, INC., ITASCE, ILLINOIS 60143, USA, sous la référence Série EK.

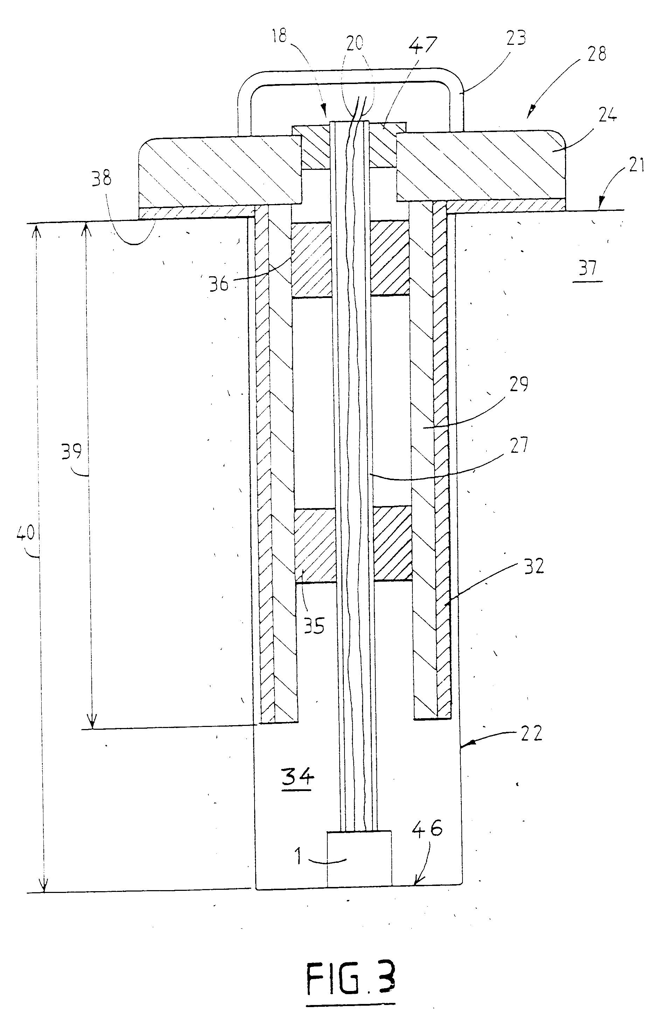

Sur la Figure 3, les pièces fonctionnellement identiques ou similaires à celles de la Figure 2, sont repérées par des numéros identiques à ceux de la Figure 2.

Dans le cas illustré Figure 3 où le capteur 1 est constitué par un accéléromètre, celui-ci est posé ou plaqué contre une paroi de la cavité 34, de préférence contre le fond 46 du puits 22 ; l'accéléromètre est monté à l'extrémité du tube 27 formant support et dans lequel cheminent les câbles ou fils 20 de raccordement du capteur au boîtier contenant les moyens de traitement de signaux.

Par comparaison avec la Figure 2, l'obturateur 33 est supprimé, de même que la bague 26 et, le cas échéant, le disque 30 et le passe-fil 31.

Un bouchon 47 en matériau élastomère obture l'orifice (repère 25 Figure 2) prévu dans le disque 24 et entoure l'extrémité supérieure du tube 27.

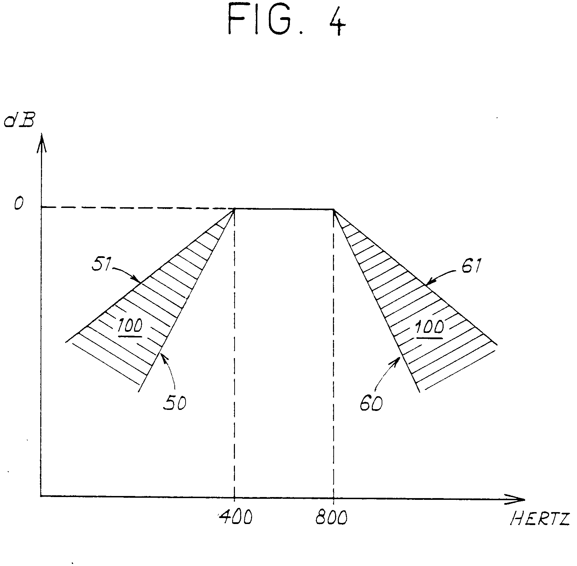

Par reference à la figure 4, l'axe des abcisses represente la frequence, l'axe des ordonnees represente le gain (en decibel).

Dans un mode preferenciel de realisation de l'invention, la representation graphique, dans ce repere, du module de la fonction de transfert (c'est à dire du gain) dudit filtre (repere 5 fig 1), qui est un filtre passe bande, est situee à l'interieur de la zone hachurée (qui est delimitee par des segments 50,51,60,61de droite).

Comme illustre sur cette figure, le gain est sensiblement nul dans la gamme des frequences allant de 400 hertz à 800 hertz; les reperes 50 et 51 correspondent respectivement à une pente d'attenuation du filtre aux basses frequences de 24 (respectivement 6) decibel par octave.

les reperes 60 et 61 correspondent respectivement à une pente d'attenuation du filtre aux hautes frequences de 24 (respectivement 6) decibel par octave."

## Revendications

1. Dispositif de détection et de localisation de fuites de fluides circulant dans une canalisation enfouie dans le sol, lequel dispositif comporte un capteur (1, 2) d'écoute sans contact avec ladite canalisation, comporte un dispositif de traitement des signaux délivrés par ledit capteur d'écoute et comporte un casque muni de haut-parleurs (15) alimentés par ledit dispositif de traitement de signaux, lequel casque comporte en outre un microphone (16) connecté auxdits moyens de traitement de signaux, et dans lequel lesdits moyens de traitement de signaux comportent des moyens électroniques (9, 10) de réduction du bruit.

2. Dispositif selon la revendication 1, comportant un casque muni de deux coquilles (13, 14) acoustiquement isolées, chacune desdites coquilles comportant ledit haut-parleur (15) et ledit microphone (16) qui sont connectés auxdits moyens de traitement de signaux, et dans lequel ledit capteur (1, 2) d'écoute est monté sur un support (18) susceptible d'être enfoncé dans un puits (22) creusé dans le sol (37).

3. Dispositif selon l'une quelconque des revendications 1 à 2, comportant des moyens (26, 32, 35, 36, 38) d'isolation acoustique et vibratoire dudit capteur d'écoute (1).

4. Dispositif selon la revendication 3, comportant des moyens pour positionner ledit capteur d'écoute (1) constitué par un microphone dans ledit puits (22) à une profondeur (41) comprise entre 10⁻¹ mètre et 1 mètre et comportant des moyens pour faire varier ladite profondeur (41) d'enfoncement dudit microphone d'écoute (1) dans ledit puits.

5. Dispositif selon l'une quelconque des revendications 1 à 4, dans lequel ledit capteur d'écoute (1) est monté à l'extrémité inférieure d'un support (27) susceptible de coulisser à l'intérieur d'un guide (29) entouré d'une chemise isolante (32).

6. Dispositif selon l'une quelconque des revendications 1 à 5, comportant deux capteurs d'écoute (1, 2), respectivement fixés à deux supports tubulaires (18, 19) susceptibles d'être disposés à l'intérieur de deux puits respectifs creusés dans le sol.

7. Dispositif selon l'une quelconque des revendications 1 à 6, dans lequel lesdits moyens de traitement de signaux délivrés par ledit capteur d'écoute (1, 2) comportent un sélecteur (3), permettant de transmettre les signaux issus d'au moins deux capteurs d'écoute (1, 2) vers lesdits moyens de traitement de signaux.

8. Dispositif selon l'une quelconque des revendications 1 à 7, comportant à l'intérieur d'un boîtier (11) portable :
- un préamplificateur (4) des signaux délivrés par ledit capteur d'écoute,
- un filtre (5) passe-haut ou passe bande de filtrage des signaux délivrés par ledit préamplificateur (4).

9. Dispositif selon l'une quelconque des revendications 1 à 8, dans lequel ledit capteur (1) d'écoute du bruit de fuite du fluide dans ladite canalisation, est constitué par un microphone monté à l'extrémité inférieure d'un support (27) par l'intermédiaire de bagues (26) isolantes.

10. Dispositif selon l'une quelconque des revendications 1 à 9, dans lequel ledit capteur d'écoute (1) est un microphone à électret, et dans lequel ledit guide est pourvu à son extrémité inférieure d'un obturateur (33) acoustiquement transparent.

11. Dispositif selon l'une quelconque des revendications 1 à 10, dans lequel lesdits moyens de traitement de signaux comportent un filtre (5) passe bande dont la fréquence basse de coupure est supérieure à 100 hertz et dont la fréquence haute de coupure est inférieure à 2000 hertz."
